Europäisches Patentamt

(19) European Patent Office

Office européen des brevets

(11) Publication number: **0 089 442**

A1

(12) ## EUROPEAN PATENT APPLICATION

(21) Application number: **82630021.2**

(22) Date of filing: **19.03.82**

(51) Int. Cl.³: **G 01 M 13/02**
**G 01 P 15/16, G 01 D 5/248**
**G 01 P 3/481**

(43) Date of publication of application:
**28.09.83 Bulletin 83/39**

(84) Designated Contracting States:
**AT BE CH DE FR GB IT LI NL SE**

(71) Applicant: **Schaub, Stanley R.**
**11, rue Galgenberg**
**L-6116 Junglinster(LU)**

(71) Applicant: **Van Vliet, Peter**
**5, rue Principale**
**L-8376 Kahler(LU)**

(72) Inventor: **Schaub, Stanley R.**
**11, rue Galgenberg**
**L-6116 Junglinster(LU)**

(72) Inventor: **Van Vliet, Peter**
**5, rue Principale**
**L-8376 Kahler(LU)**

(74) Representative: **Dennemeyer, John James et al,**
**Office Dennemeyer S.à.r.l. P.O. Box 41**
**Luxembourg(LU)**

(54) Digital analyser of a mechanical motion transmission.

(57) Apparatus is disclosed for use in acquiring data from a mechanical motion transmission system 1 and for generating electrical signals which are indicative of the substantially instantaneous displacement, velocity and acceleration of one or more moving elements 2, 3 within the system. The said parameters can be utilized for monitoring the condition of the system, isolating faults or forecasting failures within the system; they may also be utilized as a feedback signal within a servomechanism. The said parameters are derived from a succession of electric pulses and which correspond with motion positions (equi-angular or equi-distant) associated with at least one moving element 2 within the system 1 (i.e. electrical signals generated at each fixed angle of a shaft position encoder 6). By shifting the electrical signals a predetermined amount, a novel digital filter 21 is provided for aiding in the fault isolation process.

EP 0 089 442 A1

./...

0089442
82630021-2

PHASE-DOMAIN LOGGER

The present invention relates to a method for monitoring the condition, isolating faults and forecasting failures in a mechanical motion transmission system without the need for dismantling. Based upon the principle of engineering dynamics it is possible to perform the above functions provided that the following parameters can be acquired from one or more, judiciously selected moving elements within the system: substantially instantaneous displacement, substantially instantaneous absolute velocity and substantially instantaneous acceleration. Hereinafter, these three parameters are referred to as the "complete dynamic picture".

Methods for assessing the condition, isolating faults and forecasting failures in mechanical motion transmission systems are known in the prior art; the methods are related to internal combustion engines. An example of a prior art method includes the U.S. Patent to Radcliffe et al. In this method average acceleration measurements of the pistons are derived during each power stroke and are based upon relative speed measurements taken at the beginning and end of each power stroke. A low piston acceleration relative to the other pistons, for example, is indicative of an unhealthy condition for that piston/cylinder combination.

Another prior art method includes the U.S. Patent to Bouverie and Manas. In this method a proximity sensor, mounted on the flywheel housing, detects the passage and generates an electrical signal for each successive ring gear tooth on the flywheel. Time interval samples are derived between each pair of successive gear teeth. The time interval samples are stored, combined and algorithms are applied to them in a computer to produce overall type performance (i.e. power loss with a cylinder).

The present invention provides improvements over that suggested by such prior art. More particularly, a) the method is not limited to an internal combustion engine but is applicable to any mechanical motion transmission system; b) a complete dynamic picture can be produced; c) no computer operation or algorithms are required;

d) by shifting the velocity data by a predetermined amount, a digital filter is provided for aiding in the fault isolation process.

The present invention is composed of three basic units: the time-to-velocity converter, the parameter generator and the digital filter.

The time-to-velocity converter senses successive increments of motion (equi-angular or equi-distant) from a moving element within a system and measures the time interval between each successive increment pair. The time interval samples are inversely proportional to the absolute velocity (i.e. velocity with dimensions). If the increments of motion are very small, say less than one degree, then a measure of substantially instantaneous, absolute velocity is provided.

By way of example assume that a shaft position digital encoder generates a fixed, equal angle K every one-half degree. If the time interval T between a certain angle K is 0.02 seconds, then the substantially instantaneous, absolute, angular velocity $\omega$ is 250 degrees per second according to the following equation:

$$\omega = \frac{K}{T} = \frac{0.5 \text{ degrees}}{0.02 \text{ seconds}} = 25 \text{ degrees/second}$$

The velocity is considered the key parameter from two points of view. Firstly, it is used to derive all other functions associated with the invention. Secondly, it is directly proportional to the coulomb friction within the system.

The parametric generator operates on each time interval sample generated by the time-to-velocity converter and derives a measure of substantially instantaneous displacement and substantially instantaneous acceleration. This is accomplished in a digital manner and consists of an integration and differentiation process respectively. The operations involve data shifting, addition and subtraction.

The digital filter also operates on each time interval sample generated by the time-to-velocity converter. Specifically, the time interval samples are delayed by a predetermined number of fixed angles followed by an addition and subtraction process. This can result in the cancellation or enhancement of various velocity contributions of a periodic nature within the system.

The essence of the invention lies in the fact that the time interval samples associated with each fixed angle of the machine cycle are operated upon in the phase-domain rather than the time-domain. This offers the distinct advantage that all operations (i.e. differentiation, integration, etc.) are independent of time and frequency considerations. Further clarification of this essential point is provided in the subsequent specification by way of graphical analysis.

Other objects, features and advantages of the invention will be readily apparent from the following description of certain preferred embodiments thereof, taken in conjunction with the accompanying drawings although variations and modifications may be effected without departing from the spirit and scope of the novel concepts of the disclosure and in which:

Figure 1 is a general block diagram illustrating the invention and a unit under test.

Figure 2 consists of plots indicating the relationship between time interval and velocity as a function of the digital encoder angle.

Figure 3 is a detailed block diagram of the parametric generator with the plots comprising a "complete dynamic picture".

Figure 4 is a detailed block diagram of the digital filter.

Figure 5 are plots of velocity before and after filtering.

Figure 6 are plots showing a complete dynamic picture in the time-domain.

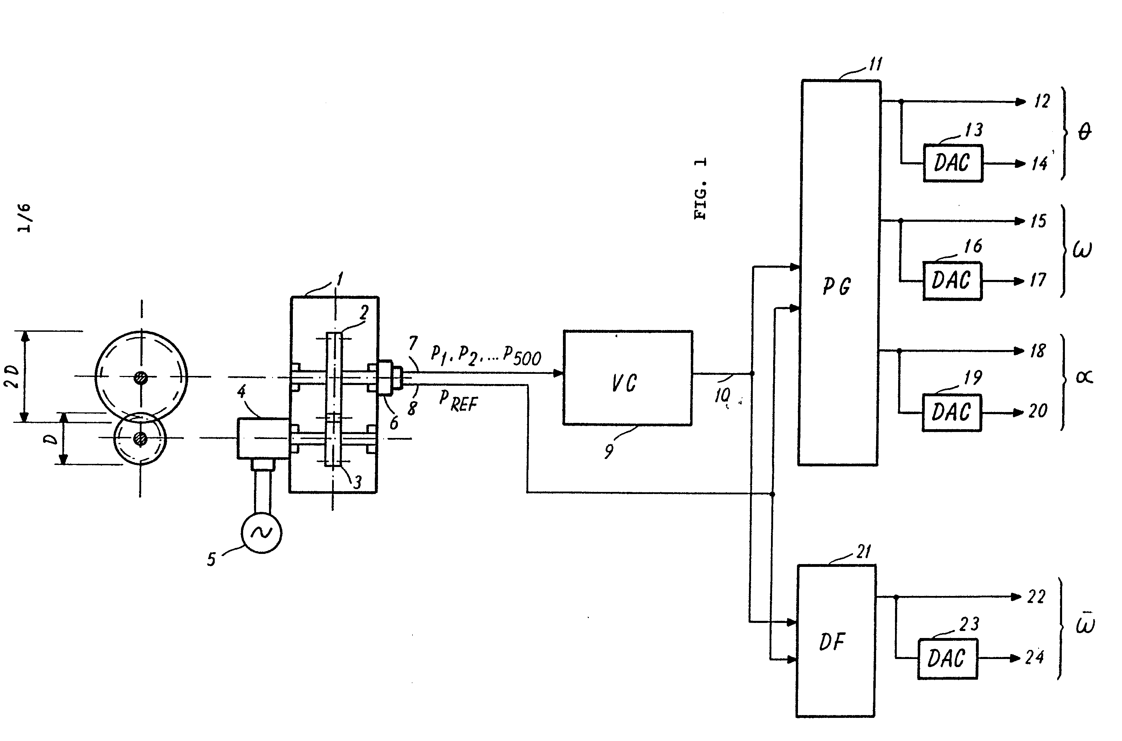

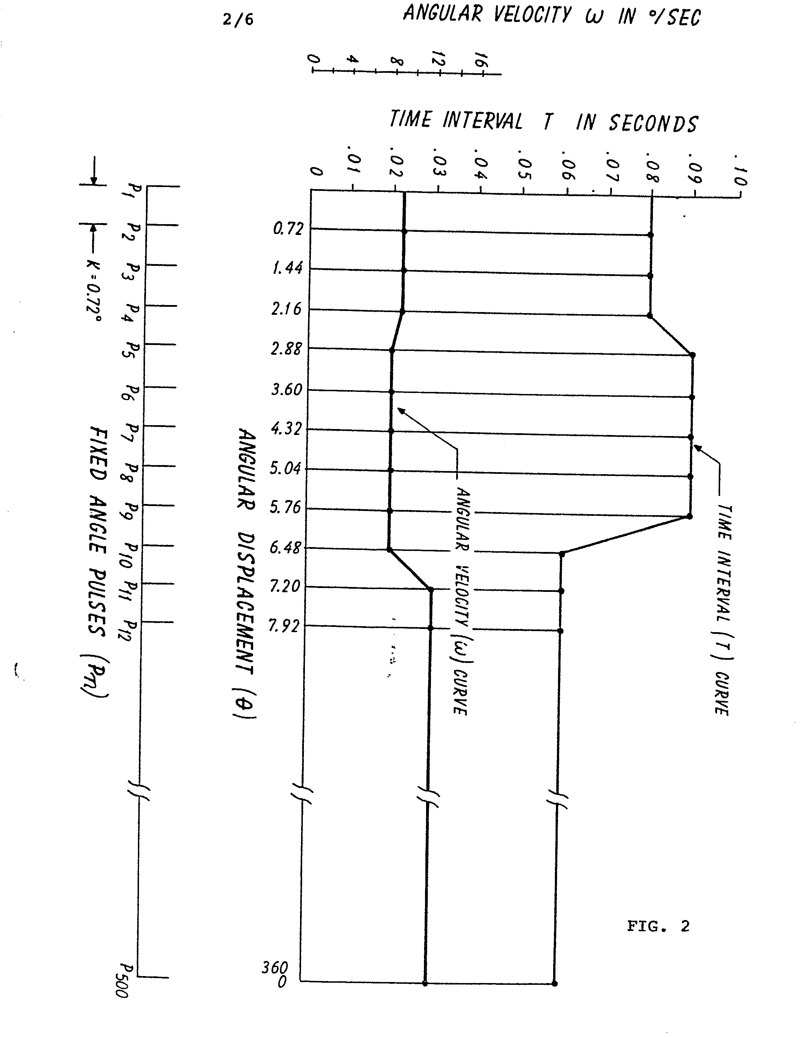

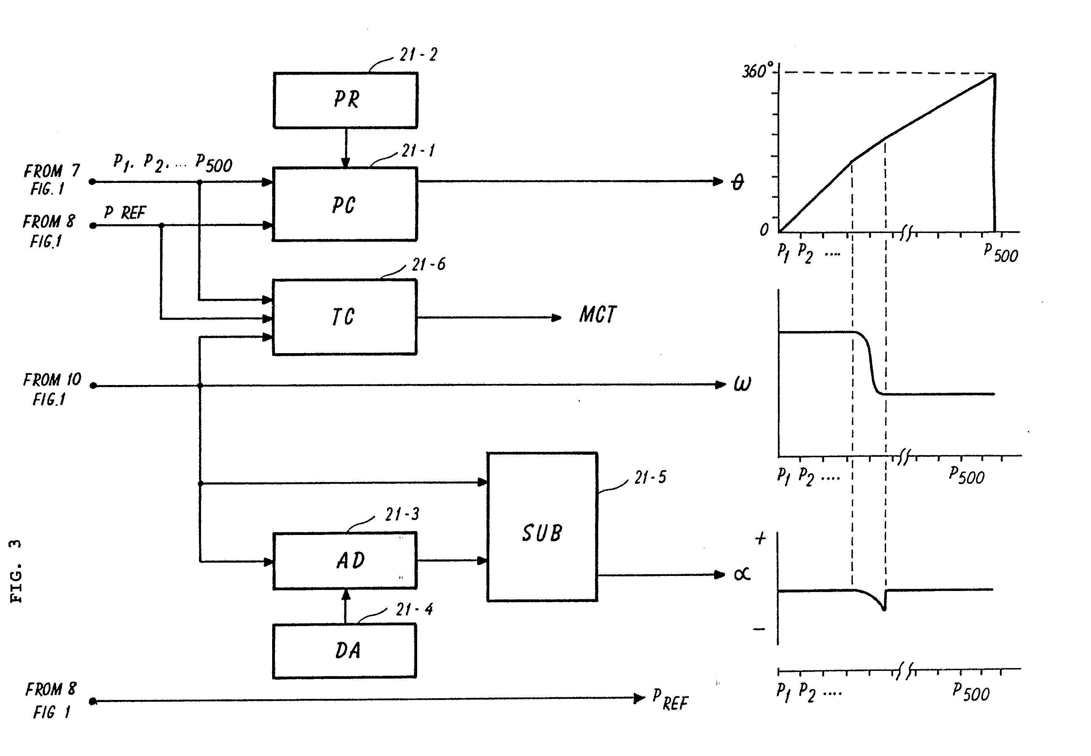

Turning to Figure 1, there is shown a gear box logger 1 in conjunction with the phase-domaine 9 through 24. The gear box mechanism 1 is considered as a unit-under-test and is constructed in a simple manner such that the theory of fault isolation can be readily illustrated and described in the subsequent specification.

A synchronous electric motor 4 is powered by an a-c source 5. Gear 3, located on the motor shaft, drives gear 2 which has twice the diameter of gear 3. A shaft position encoder 6, located on the shaft of gear 2, provides a successive series of 500 electrical pulses ($P_1$, $P_2$,....$P_{500}$) for each revolution of said encoder and applies them to the time-to-velocity converter TVC 9 by way of wire 7. Further, a reference pulse $P_{REF}$ is applied to both the parametric generator PG 11 and the digital filter DF 21 by way of wire 8 to indicate when encoder 6 completes each cycle of revolution.

The parametric generator PG 11 operates on the pulses provided by lines 8 and 10 and produces a complete dynamic picture of gear 2 and its interaction with the other moving elements. More particularly, the measurement of displacement $\theta$, velocity $\omega$ and acceleration $\alpha$ are provided in digital format at outputs 12, 15 and 18 respectively. The latter signals are also applied to the digital-to-analog converters DAC 13, 16 and 19 respectively to provide measurements of $\theta$, $\omega$ and $\alpha$ in analog format at outputs 14, 17 and 20 respectively.

The digital filter DF 21 also operates on the pulses provided by lines 8 and 10 to produce a filtered velocity $\overline{\omega}$ at output 22. The digital output 22 is applied to a digital-to-analog converter DAC 23 to produce the same information in analog format at output 24.

The purpose of the time-to-velocity converter TVC 9 is to provide a measurement of time interval T between each successive fixed angle K generated by the digital encoder 6. The measurement of the time interval T can be obtained from a digital counting device whereby a pulse from the digital encoder 6 initiates the count and whereby the next successive pulse from the said encoder both terminates the count and re-initiates the next counting cycle. As the design of such digital counting devices is well known in the state-of-the-art, no detailed circuitry is provided in this specification.

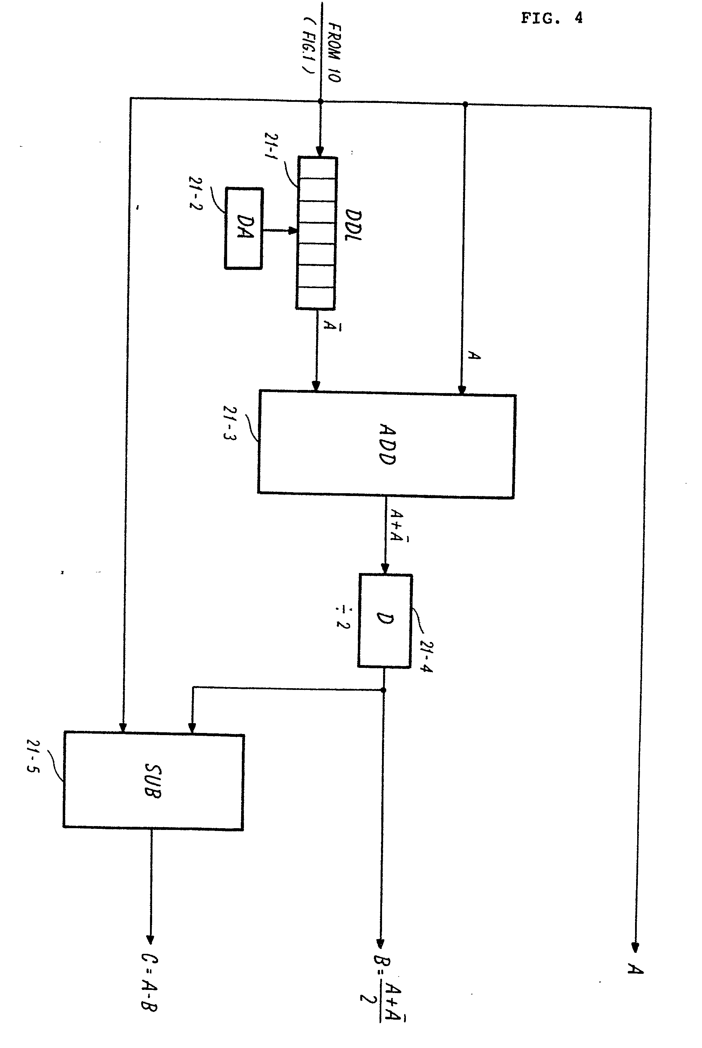

Turning next to Figure 2, there is shown two plots which illustrate by example the inverse relationship of the time interval T and the angular velocity $\omega$ as related to the time-to-velocity converter 6. One plot displays the time interval T versus the angular displacement of the encoder 6. The other plot displays velocity $\omega$ versus the same angular displacement $\theta$. As the digital encoder 6 produces 500 pulses per revolution ($360°$) the value of each fixed angle K is 0.72°. The three steady-state values of angular velocity $\omega$ shown on the plot are derived as follows:

$$\text{at } P_2, \quad = \frac{K}{T} = \frac{0.72}{0.08} = 9°/\text{second}$$

$$\text{at } P_6, \quad = \frac{K}{T} = \frac{0.72}{0.09} = 8°/\text{second}$$

$$\text{at } P_{10}, \quad = \frac{K}{T} = \frac{0.72}{0.06} = 12°/\text{second}$$

Turning to Figure 3 there is shown a detailed block diagram of the parametric generator PG 11 (Fig. 1). The position counter 21-1 and preset 21-2 generate the measurement of the displacement $\theta$ by counting or adding each fixed angle pulse $P_n$ beginning with the reference pulse $P_{REF}$. The preset 21-2 establishes the number of pulses in the machine cycle which is 500 in the case of the gear box 1 (Fig. 1). At the end of the machine cycle the process is re-initiated producing another ramp function. Time counter 21-6 provides a measure of the machine cycle time (MCT).

Concerning the measurement of velocity $\omega$, there is no mechanization; it is merely a feedthrough from wire 10 (Fig. 1).

The angle delay 21-3, delay adjust 21-4 and the subtractor 21-5 generate the measurement of the acceleration . This is accomplished by delaying the measurement of velocity $\omega$ by one fixed angle K and performing a subtraction process with the undelayed pulse. In effect, this is a differentiation process.

The dynamic picture shown in Figure 3 is in the phase-domain because the independent variable (i.e. x-axis) consists of fixed angle pulses $P_n$. When the parameters $\theta$, $\omega$ and $\alpha$ are applied to a display device, the independent variable is in terms of time and the picture is thus established in the time-domain.

Time-domain and phase-domain pictures appear generally the same, except the time-domain pictures are stretched or compressed to various degrees along the independent-axis when compared to the phase-domain picture.

Turning to Figure 4 there is shown the details of the digital filter 21 (Figure 1). The filter 21 consists of a digital delay line 21-1, a delay adjust 21-2, an adder 21-3, a divider 21-4 and a subtractor 21-5. The purpose of the filter 21 is to determine the cyclic velocity contributions of the various moving elements, if any.

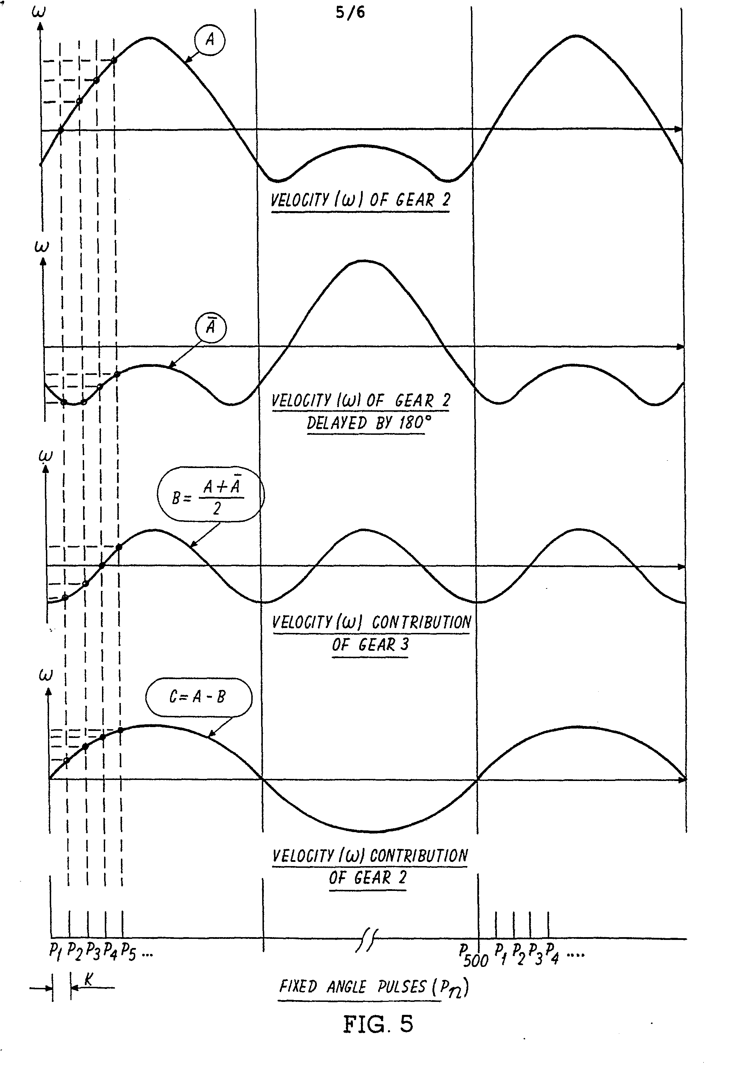

Turning next to Figure 5, there is shown a series of velocity plots. The purpose of these plots is to explain the operation of the filter 21. Plot A represents the unfiltered velocity information from the time-to-velocity converter 9 (Figure 1). Plot $\overline{A}$ represents Plot A delayed by $180°$ (i.e. delayed by $180°$ in fixed angle counts). Plots B and C represent the velocity fluctuations associated with gears 3 and 2 respectively. Such fluctuations are representative of eccentric, mass unbalances on both gears.

The de-synthesization of the original waveform A into the various components B and C is based upon Fourier theory. The division by two in the mechanization process relates to the second harmonic. More particularly, gear 3 rotates at twice the frequency as gear 2. The latter is considered to rotate at the fundamental frequency.

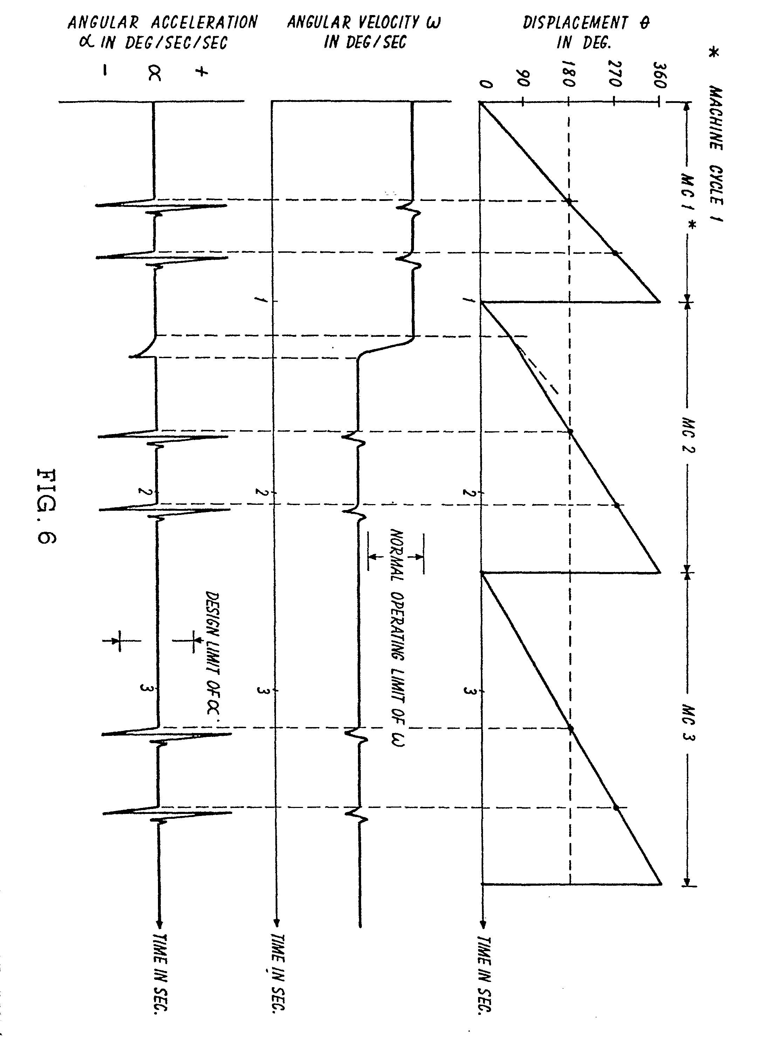

Finally, turning to Figure 6 there is shown an example of a complete dynamic picture of the gear box mechanism 1 (Fig.1) in the time-domain. For example purposes, data anomalies have been introduced into the dynamic picture which reflect two faults in the gear box mechanism 1. A graphical analysis leading to the isolation of the faults is provided below.

Turning first to the plot of angular velocity versus time, it is indicated that the velocity remains within the normal operating range until machine cycle MC 2, at which time it reduces below the "normal operating range" and remains at that level. Such a condition can be related to excessive coulomb friction in the system and/or low power output from the electric motor 4 (Fig. 1). The reduction in speed also reflects a deceleration $(-\alpha)$ and an increase in the period of machine cycle MC 2 and 3 as compared to MC 1.

Again, in reference to the plot of angular velocity $\omega$, there is indicated a series of velocity transients. By inspecting the plot of displacement $\theta$ versus

time it is indicated that the transients occur twice during each machine cycle at the same angular displacement (i.e. 180° and 360°). Such an anomaly is probably related to a damaged gear tooth on gear 3 (Fig. 1). This stems from the fact that gear 3 makes two revolutions for each revolution of gear 2.

It is pointed out that for any mechanical motion transmission system, the slowest moving element in the system establishes the machine cycle (360°). If the digital encoder (or other suitable sensor) is not co-located on the shaft of the slowest moving element, then the machine cycle must be established in terms of the shaft rotation on which the digital encoder is located. For example, if the digital encoder 6 had been attached to the shaft of gear 3, then the machine cycle (360°) would be equivalent to two revolutions of gear 3 or 720°.

As evidenced from the graphical analysis another important feature of the invention is the fact that it provides a new concept for vibration test and analysis. In the prior art methods it is not possible to isolate faults to the same degree because: a) the full dynamic picture can not be generated, b) no suitable vibration sensors are available to measure angular acceleration, c) the filters are frequency sensitive.

Although the invention has been described with respect to preferred embodiments, it is not to be so limited as changes and modifications can be made which are within the full intended scope as defined by the appended claims.

Claims:

1.      Apparatus for providing measurements indicative of (i) substantially instantaneous displacement, (ii) substantially instantaneous, absolute velocity and (iii) substantially instantaneous acceleration of a moving element which is a member of a mechanical motion transmission apparatus or system comprising;

a)      . speed sensing means coupled to said moving element and responsive to movement thereof through successive, small increments of motion (e.g. angular or linear) of said moving element for generating a signal for each occurrence of small increments of motion thereof, said small increments being a fraction of a full-cycle of operation (i.e. one revolution);

b)      means responsive to at least one said signal for providing an indication of one full-cycle of operation of said moving element;

c)      signal processing means responsive to successive pairs of said small increment signals for providing time interval measurements between said small increments;

d)      additional signal processing means for providing measurements indicative of (i) substantially instantaneous displacement (ii) substantially instantaneous, absolute velocity, and (iii) substantially instantaneous acceleration on a small increment signal by small increment signal basis from successive time interval measurements, said absolute velocity measurements being equal to the value of the small increment of motion divided by the time interval associated with each said small increment of motion; whereby anomalies in said apparatus at sub-cyclic intervals may be detected;

e)      additional signal processing means for de-synthesizing said measurements of absolute velocity to determine any cyclical variations in velocity anomalies in said apparatus or system.

2.      An apparatus according to claim 1 whereby said signal processing means for providing said measurements of time interval comprises:

a)      a digital counter for providing an automatic count;

b)      . means for initiating the first pulse in response to a first of a successive number of small said signals provided by the occurrence of a first small angle indication;

c)        a means for terminating the count by the occurrence of a second said small increment of motion thereof;

d)        a means for simultaneously providing a readout of said counter and re-initiating the next and successive cycles, whereby;

e)        said cycles are indicative of elapsed time;

f)        said elapsed time being indicative of substantially instantaneous absolute velocity.

3.        An apparatus according to claim 1 whereby each said small increment signal is counted by a counter to provide a measure of displacement of the said rotating member whereby:

a)        the count is initiated by said signal for providing an indication of one full-cycle of revolution;

b)        the count is terminated at the end of one full cycle of revolution, whereby;

c)        the number of counts indicative of a full-cycle of revolution is established by a preset apparatus controlling said counter.

4.        An apparatus according to claim 2 for comparing the absolute velocity of each succeeding increment of motion with the previous increment of motion to provide a measure of acceleration whereby:

a)        the said readout of the counter is delayed by one increment of motion and whereby;

b)        the delayed and undelayed values are subtracted.

5.        An apparatus according to claim 2 for operating on the absolute velocity of each succeeding increment of motion to determine any cyclic variations in absolute velocity associated with the moving elements, whereby:

a)        the said readout of the counter shifted by a pre-selected number of increments of motion / by means of a digital delay device controlled by a delay adjust, whereby;

b)        the shifted and unshifted readouts are further operated upon to de-synthesize the absolute velocity waveform.

6.        The combination in accordance with claim 1 for providing any <u>cyclical</u> occurrence of anomalies as detected to determine the location of the anomalies in the system as a function of the cycles of operation of other elements of the system other than the one said element.

7. An apparatus according to claim 1 whereby the interval times associated with each increment of motion are summed to provide a measure of machine cycle time.

8. An apparatus according to claim 1 whereby the measurements of displacement, velocity and acceleration or a combination thereof may be employed as a high resolution feedback control signal for a servomechanism.

FIG. 1

0089442

ANGULAR VELOCITY ω IN °/SEC

FIG. 2

FIG. 3

FROM 8
FIG 1

FROM 10
FIG.1

FROM 8
FIG.1    P REF

FROM 7
FIG. 1    $P_1, P_2, \ldots, P_{500}$

DA

AD    21-3

21-4

TC    21-6

PC    21-1

PR    21-2

SUB    21-5

$P_{REF}$

$\alpha$

MCT

$\omega$

$\theta$

4/6

FIG. 4

FROM 10
( FIG.1 )

21-1 — DDL

21-2 — DA

$\bar{A}$

A

21-3 — ADD

$A+\bar{A}$

$\div 2$  D  21-4

21-5 — SUB

C = A-B

$B=\dfrac{A+\bar{A}}{2}$

A

$\omega$

(A)

VELOCITY (ω) OF GEAR 2

$\omega$

($\bar{A}$)

VELOCITY (ω) OF GEAR 2
DELAYED BY 180°

$\omega$

$B = \dfrac{A + \bar{A}}{2}$

VELOCITY (ω) CONTRIBUTION
OF GEAR 3

$\omega$

$C = A - B$

VELOCITY (ω) CONTRIBUTION
OF GEAR 2

$P_1$ $P_2$ $P_3$ $P_4$ $P_5$ ...            $P_{500}$ $P_1$ $P_2$ $P_3$ $P_4$ ....

$K$

FIXED ANGLE PULSES ($P_n$)

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | ---<br>US-A-4 064 747 (R.J.RACKLIFFE et al.)<br>*Abstract; column 6, lines 7 to 68; column 7, lines 1 to 19 and 42 to 68; column 8, lines 33 to 41; column 9, lines 9 to 47; figures* | 1-4,6, 8 | G 01 M 13/02<br>G 01 P 15/16<br>G 01 D 5/248<br>G 01 P 3/481 |
| Y | ---<br>US-A-4 179 922 (W.M.BOUVERIE et al.)<br>*Abstract; summary; column 9, line 20 to column 13, line 68; figures* | 1,6 | |
| Y | ---<br>US-A-4 055 993 (R.J.RACKLIFFE et al.)<br>*Abstract; summary* | 2 | |
| Y | ---<br>L'ONDE ELECTRIQUE, vol. 61, no. 6-7, June-July 1981, pages 29-34, Paris (FR);<br>J.P.MASSON et al.: "Mesure de vitesse instantanée: application à un micromoteur synchrone monophasé". *The whole document* | 2,3 | **TECHNICAL FIELDS SEARCHED (Int. Cl. ³)**<br><br>G 01 M 13<br>G 01 M 15<br>G 01 P 15<br>G 01 P 3<br>G 01 D 5 |
| Y | ---<br>IBM TECHNICAL DISCLOSURE BULLETIN, vol. 11, no. 8, January 1969, pages 1033,1034, New York (USA);<br>V.E.AKINS et al.: "Hybrid system for measurement of control of velocity". *The whole document*<br>---    -/- | 2,8 | |

The present search report has been drawn up for all claims

| Place of search<br>THE HAGUE | Date of completion of the search<br>25-11-1982 | Examiner<br>VAN ASSCHE P.O. |
|---|---|---|

EPO Form 1503. 03.82

European Patent
Office

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl. 3) |
| Y | DE-A-1 523 208 (LICENTIA PATENT-VERWALTUNGS-GmbH) *Page 3, section 2; pages 4 to 8; figures* | 1-4 | |
| | --- | | |
| A | DE-A-2 334 772 (SIEMENS AG.) *Page 6, figures* | 1,6 | |
| | ----- | | |
| | | | TECHNICAL FIELDS SEARCHED (Int. Cl. 3) |

The present search report has been drawn up for all claims

| Place of search | Date of completion of the search | Examiner |
|---|---|---|
| THE HAGUE | 25-11-1982 | VAN ASSCHE P.O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82